# EUROPEAN PATENT SPECIFICATION

(11) **EP 0 656 391 B1**
(45) Date of publication and mention of the grant of the patent: **10.03.1999**
(21) Application number: 94118777.5
(22) Date of filing: 29.11.1994
(51) Int. Cl.: C08K 3/36, C08L 27/12, C08L 83/08

(54) **Rubber composition**
Kautschukzusammensetzung
Composition de caoutchouc

(30) Priority: 30.11.1993 JP 326093/93
(43) Date of publication of application: 07.06.1995
(73) Proprietor: Dow Corning Toray Silicone Company, Limited, Tokyo 103 (JP)
(72) Inventor: Kobayashi, Hideki, Dow Corning Toray, Ichihara-shi, Chiba Prefecture (JP)
(74) Representative: Spott, Gottfried, Dr.

(56) References cited:
- EP-A- 0 380 104
- WO-A-81/00573
- GB-A- 1 284 081
- US-A- 3 192 175

## Description

The invention relates to a rubber composition comprising a fluororubber, a fluorosilicone gum, a fluorosilicone oil, silica and a curing agent.

Fluororubbers are characterized by excellent heat, oil, and weather resistance and by excellent mechanical strength. As a result, they are used in applications where such properties are critical. However, fluororubbers have poor, low-temperature flexibility. Fluororubbers have been mixed with fluorosilicone rubbers, which have excellent low-temperature properties, in an attempt to correct this deficiency in JP-A(s) 56-50948 and 63-213545. However, the poor compatibility between fluororubbers and fluorosilicone rubbers has made it difficult to obtain uniform mixtures by simply mixing the two. The resulting mixtures also have very unsatisfactory processabilities. JP-A 2-196838 has proposed the addition of epoxy-functional organoalkoxysilane to the fluororubber and fluorosilicone rubber mixture to solve these problems. The resulting rubber, however, has poor mold-release characteristics, and this particular deficiency imposes restrictions on its range of application.

We have found unexpectedly that the addition of a special fluorosilicone oil as a compatibilizer for a mixture of fluororubber and fluorosilicone rubber results in enhanced compatibility and also provides cured rubber moldings that have good mold-release along with excellent physical properties.

This invention introduces a rubber composition that cures to give rubber moldings with good mold-release and excellent physical properties, said composition comprising
(A) 100 weight parts of a fluororubber;
(B) 2 to 200 weight parts of a fluorosilicone gum that contains the CF₃CH₂CH₂MeSiO siloxane unit, wherein Me denotes a methyl group;
(C) 0.01 to 40 weight parts of a fluorosilicone oil that contains the F(CF₂)ₐCH₂CH₂MeₙSiO_{(3-n)/2} siloxane unit, in which a is an integer having a value of at least 4 and n is 0, 1, or 2, and the CF₃CH₂CH₂MeSiO siloxane unit;
(D) 1 to 100 weight parts of a silica micropowder; and
(E) a curing agent, in a quantity sufficient to cure the composition.

The fluororubber, component (A), used by the present invention comprises fluorine-containing rubbery elastomers, with organoperoxide-vulcanizable fluororubbers being preferred. Fluororubber is exemplified by vinylidene fluoride homopolymers, vinylidene fluoride-tetrafluoroethylene copolymers, vinylidene fluoride-hexafluoropropylene copolymers, vinylidene fluoride-tetrafluoroethylene-hexafluoropropylene copolymers, tetrafluoroethylene-hexafluoropropylene copolymers, and tetrafluoroethylene-perfluoroalkyl vinyl ether copolymers. Among these, fluororubber that contains a crosslinkable functional group (crosslink site monomer) is preferred.

The fluorosilicone gum, component (B), is an organopolysiloxane containing the CF₃CH₂CH₂MeSiO siloxane unit (Me = methyl), and this siloxane unit preferably makes up at least 70 mole% of component (B). Siloxane units that may be present in component (B) in addition to the CF₃CH₂CH₂MeSiO unit are exemplified by methylvinylsiloxane, allylmethylsiloxane, hexenylmethylsiloxane, dimethylsiloxane, methylphenylsiloxane, and methylethylsiloxane. The methylvinylsiloxane unit is preferred. In addition to the preceding siloxane units, the siloxane unit RSiO_{3/2} (R = monovalent hydrocarbon group) may make up part of the siloxane units other than CF₃CH₂CH₂MeSiO. The monovalent hydrocarbon group R is exemplified by alkyl groups, such as methyl and ethyl; alkenyl groups, such as vinyl and allyl; aryl groups, such as phenyl; and the 3,3,3-trifluoropropyl group. The terminal group of component (B) is exemplified by dimethylvinylsiloxy, trimethylsiloxy, methylvinylphenylsiloxy, silanol, 3,3,3-trifluoropropyldimethylsiloxy, and 3,3,3-trifluoropropylmethylvinylsiloxy. Component (B) typically has a degree of polymerization (DP) of 1,000 to 20,000. Component (B) is added at 2 to 200 weight parts per 100 weight parts component (A), and preferably at 5 to 150 weight parts per 100 weight parts component (A).

The fluorosilicone oil component (C) is the component that characterizes the composition of the invention. Component (C) functions as a compatibilizer during the mixing of components (A) and (B) to improve compatibility between them. Component (C) consists of organopolysiloxane that contains the F(CF₂)ₐCH₂CH₂MeₙSiO_{(3-n)/2} siloxane unit and the CF₃CH₂CH₂MeSiO siloxane unit. The subscript a is an integer with a value of at least 4 (for example, 4, 6, and 8), and a need not have only a single value. The subscript n is 0, 1, or 2, and Me denotes the methyl group. The F(CF₂)ₐCH₂CH₂MeₙSiO_{(3-n)/2} unit to CF₃CH₂CH₂MeSiO unit molar ratio is preferably from 1:9 to 9:1. Component (C) may be a random or block copolymer, with block copolymers being preferred. Alkyl groups such as methyl, ethyl, and propyl, and alkenyl groups such as vinyl, allyl, and so forth, are Examples of the organic groups that may be bonded in any siloxane units present in addition to the two units specified above. Methyl is preferred. The molecular structure of component (C) is exemplified by straight-chain, branched, and cyclic structures. Component (C) preferably has a viscosity at 25°C in the range of 10 to 10,000 mPa.s (centipoise) .

Fluorosilicone oil (C) is exemplified by fluorosilicone oils with the following general formulas (a), (b), and (c) .

(a) F(CF₂)₈C₂H₄Me₂SiO(CF₃CH₂CH₂MeSiO)_{w}SiMe₂C₂H₄(CF₂)₈F

(w is an integer with a value of 1 to 300 and Me = methyl)

(b) Me₃SiO(F(CF₂)₄C₂H₄MeSiO)ₓ(CF₃CH₂CH₂MeSiO)_{y}SiMe₃

(x and y are each integers with values of at least 1,
(x + y) = 2 to 1,000, and Me = methyl) 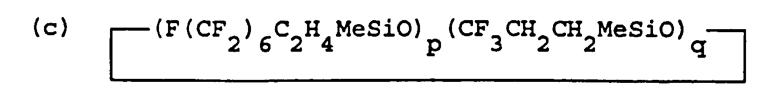 (p and q are each integers with values of at least 1,
(p + q) = 3 to 30, and Me = methyl)

These fluorosilicone oils may be used individually or in combinations of two or more.

Fluorosilicone oil with general formula (a) may be synthesized by the following methods:
(i) hydrolysis of heptadecafluorodecyldimethylchlorosilane by itself, followed by polymerization with cyclic 3,3,3-trifluoropropylmethylsiloxane in the presence of polymerization catalyst; or
(ii) cohydrolysis of heptadecafluorodecyldimethylchlorosilane with 3,3,3-trifluoropropylmethyldichlorosilane, followed by polymerization with cyclic 3,3,3-trifluoropropylmethylsiloxane in the presence of polymerization catalyst.

Fluorosilicone oil with general formula (b) may be synthesized by the following methods:
(i) cohydrolysis of nonafluorohexylmethyldichlorosilane with 3,3,3-trifluoropropylmethyldichlorosilane, followed by re-equilibration copolymerization in the presence of hexamethyldisiloxane using a known basic catalyst;
(ii) dehydrative polycondensation between the alpha,omegadihydroxypoly (nonafluorohexylmethylsiloxane) and alpha,omega-dihydroxypoly (3,3,3-trifluoropropylmethylsiloxane) produced by the hydrolysis, respectively, of nonafluorohexylmethyldichlorosilane by itself and 3,3,3-trifluoropropylmethyldichlorosilane by itself;
(iii)chain elongation between the alpha,omegadihydroxypoly(nonafluorohexylmethylsiloxane) and alpha, omega-dihydroxypoly(3,3,3-trifluoropropylmethylsiloxane) produced above, using a crosslinker such as difunctional organosilane; and
(iv) living polymerization, using sodium silanolate or lithium silanolate, of a mixture of nonafluorohexylmethylcyclotrisiloxane and 3,3,3-trifluoropropylmethylcyclotrisiloxane.
These reactions may be heated as desirable and may be run in organic solvent.

Fluorosilicone oil of general formula (c) may be synthesized by the following methods:
(i) cohydrolysis of tridecafluorooctylmethyldichlorosilane with 3,3,3-trifluoropropylmethyldichlorosilane;
(ii) subjecting the alpha,omega-dihydroxypoly(tridecafluorooctylmethylsiloxane-co-3,3,3-tri fluoropropylmethylsiloxane) yielded by the preceding method to re-equilibration in the presence of a known basic catalyst;
(iii)dehydrative polycondensation between the alpha,omega-dihydroxypoly(tridecafluorooctylmethylsiloxane) and alpha,omega-dihydroxypoly(3,3,3-trifluoropropylmethylsiloxane) produced by the hydrolysis, respectively, of tridecafluorooctylmethyldichlorosilane by itself and 3,3,3-trifluoropropylmethyldichlorosilane by itself; and
(iv) chain elongation between the alpha,omega-dihydroxypoly(tridecafluorooctylmethylsiloxane) and alpha,omega-dihydroxypoly(3,3,3-trifluoropropylmethylsiloxane) produced above, using a crosslinker such as difunctional organosilane.
The preceding reactions may be run in organic solvent.

Component (C) is added at 0.01 to 40 weight parts, preferably at 0.1 to 20 weight parts, per 100 weight parts of component (A). The cured product yielded by the composition has reduced physical properties at additions in excess of 40 weight parts. At the other extreme, the compatibility between components (A) and (B) declines at component (C) additions below 0.01 weight part.

The silica micropowder component (D) is a reinforcing filler whose purpose is to increase the mechanical strength of the composition. This component should have a specific surface area of at least 50 m²/g, and preferably has a specific surface area of 100 to 400 m²/g. Usable as component (D) are those silica micropowders already known for use as fillers for fluorosilicone rubbers. For example, the fumed silicas and calcined silicas obtained by dry processes and the precipitated silicas obtained by wet processes are suitable. Also usable as component (D) are the hydrophobic silicas obtained by hydrophobicizing the surface of the aforementioned silicas by treatment with an organosilicon compound such as dimethyldichlorosilane, hexamethyldisilazane, diphenylsilanediol, and 1,3-bis(3,3,3-trifluoropropyl)tetramethyldisilazane. Component (D) is added at a level of 1 to 100 weight parts, and preferably 5 to 70 weight parts, per 100 weight parts of component (A).

The curing agent, component (E), functions to cure the composition of our invention, and any curing agent may be used that is able to cure components (A) and (B). This component encompasses those curing agents already known in the art as curing agents for fluorosilicone rubber compositions. Organoperoxides are preferred including benzoyl peroxide, 2,4-dichlorobenzoyl peroxide, di-tert-butyl peroxide, tert-butylmonochlorobenzoyl peroxide, 2,5-dimethyl-2,5-di(tert-butylperoxy)hexane, and the like. Component (E) should be added in a quantity sufficient to induce the cure of the invention composition, and in general is added at 0.1 to 20 weight parts per 100 weight parts of component (A).

In addition to components (A) to (E), various additives known for use in fluororubbers and fluorosilicone rubbers may also be used insofar as the object of this invention is not impaired. Examples of such additives are wetting agents, extending fillers, heat stabilizers, vulcanization aides, softeners, plasticizers, antioxidants, and vulcanization accelerators. Wetting agents improve the affinity between the fluorosilicone gum (B) and silica micropowder (D), and are exemplified by silanol-endblocked diorganopolysiloxanes having a low DP. The silicon-bonded organic groups in this diorganopolysiloxane are exemplified by alkyl groups such as methyl, ethyl, and propyl; alkenyl groups such as vinyl and allyl; aryl groups such as phenyl; and 3,3,3-trifluoropropyl. Silanol-endblocked 3,3,3-trifluoropropylmethylsiloxanes are specifically preferred. This siloxane preferably has a DP in the range of 1 to 100, preferably of 2 to 30. Extending fillers are exemplified by quartz powder, diatomaceous earth, calcium carbonate, aluminosilicates, mica, talc, and aluminum oxide. Heat stabilizers are exemplified by iron oxide, cerium oxide, cerium hydroxide, titanium oxide, aluminum oxide, zinc oxide, manganese carbonate, and carbon black. Triallyl isocyanurate is an example of a vulcanization aide.

The rubber composition of this invention is prepared by mixing components (A) to (E) to homogeneity, or by blending any additives into these components and then mixing to homogeneity. For example, components (A) to (D) may be mixed in a kneader mixer for 3 to 20 minutes with heating and the curing agent (E) can then be mixed in on a two-roll mill. Suitable mixers are exemplified by kneader mixers, ram cover-equipped kneader mixers, Banbury™ mixers, continuous mixers, two-roll mills, and three-roll mills.

The presence of the specific fluorosilicone oil (C) in the rubber composition of our invention induces compatibility between the fluororubber (A) and fluorosilicone gum (B) to the level of homogeneity. This prevents any decline in physical properties due to compromised compatibility and thereby yields cured rubber moldings with excellent physical properties. These moldings also exhibit excellent mold-releasability. Finally, since our claimed composition exhibits the highly desirable properties of both the fluororubber (A) and the fluorosilicone gum (B), its cured rubber moldings exhibit excellent resistance to cold, heat, solvent, and oil.

### Examples

The invention is explained in greater detail through working examples. In the examples and comparative example, "part" denotes "weight parts", the viscosity is the value at 25°C, Me stands for methyl, Vi stands for vinyl, and cP is an abbreviation for centipoise.

### Example 1

The following were charged to a kneader mixer and mixed to homogeneity: 70 parts of a fluororubber in the form of a vinylidene fluoride-hexafluoropropylene copolymer, 22.2 parts of dimethylvinylsiloxy-endblocked 3,3,3-trifluoropropylmethylsiloxane-methylvinylsiloxane copolymer gum (average DP = 7,000) composed of 99.5 mole% siloxane unit with the formula CF₃CH₂CH₂MeSiO and 0.5 mole% siloxane unit with the formula CH₃ViSiO, 1 part fluorosilicone oil (viscosity = 50 mPa.s/cP) with the following formula

F(CF₂)₈C₂H₄Me₂SiO(CF₃CH₂CH₂MeSiO)ᵥSiMe₂C₂H₄(CF₂)₈F

(v is a number that yields a viscosity of 50 mPa.s/cP),
7.5 parts of a surface-hydrophobicized fumed silica (specific surface area = 200 m²/g), and 0.3 part of cerium oxide as a heat stabilizer. 100 parts of this mixture was then mixed to homogeneity on a two-roll mill with 0.5 part of 2,5-dimethyl-2,5-di(tert-butylperoxy)hexane to yield a curable rubber composition. The rubber composition was compression molded for 10 minutes at 170°C/30 kg/cm² to yield a 2 mm-thick rubber sheet. Curing was brought to completion by heating the rubber sheet in an oven for an additional 4 hours at 200°C. The physical properties of the resulting rubber sheet (hardness, tensile strength, elongation, and tear strength) were measured in accordance with JIS K 6301, and the measurement results are reported in Table 1 below. The rubber sheet exhibited very good mold-release properties. In addition, the rubber sheet gave a smooth fracture surface, which was indicative of a thorough dispersion of each component in the rubber composition.

### Comparative Example 1

A rubber composition was prepared as in Example 1, but in this case omitting the 1 part fluorosilicone oil that was used in Example 1. The resulting rubber composition was compression molded as in Example 1 to give a 2 mm-thick rubber sheet, whose cure was again brought to completion by heating in an oven at 200°C for an additional 4 hours. The physical properties of the resulting rubber sheet are reported in Table 1 below.

### Example 2

The following were charged to a kneader mixer and mixed to homogeneity: 50 parts of a fluororubber in the form of a vinylidene fluoride-hexafluoropropylene copolymer, 37 parts of a dimethylvinylsiloxy-endblocked 3,3,3-trifluoropropylmethyl-siloxane-methylvinylsiloxane copolymer gum (average DP = 7,000) composed of 99.5 mole% siloxane unit with the formula CF₃CH₂CH₂MeSiO and 0.5 mole% siloxane unit with the formula CH₃ViSiO, 1.2 parts of a fluorosilicone oil comprising block copolymer (viscosity = 1,000 mPa.s/cP) with the following formula

ViMe₂SiO(F(CF₂)₄C₂H₄MeSiO)_{c}(CF₃CH₂CH₂MeSiO)_{d}SiMe₂Vi

(c:d = 1:1),
12.5 parts of a surface-hydrophobicized fumed silica (specific surface area = 200 m²/g), and 0.5 part of cerium oxide as heat stabilizer. 100 parts of this mixture was then mixed to homogeneity on a two-roll mill with 0.5 part of 2,5-dimethyl-2,5-di(tert-butylperoxy)hexane to yield a curable rubber composition. The rubber composition was compression molded for 10 minutes at 170°C and 3.0 mPa pressure (30 kg/cm²) to yield a 2 mm-thick rubber sheet. Curing was brought to completion by heating the rubber sheet in an oven for an additional 4 hours at 200°C. The physical properties of the resulting rubber sheet are reported in Table 1. The rubber sheet exhibited very good mold-release properties. In addition, the rubber sheet gave a smooth fracture surface, which was indicative of a thorough dispersion of each component in the cured rubber composition.

### Example 3

The following were charged to a kneader mixer and mixed to homogeneity: 100 parts of a dimethylvinylsiloxy-endblocked 3,3,3-trifluoropropylmethylsiloxane-methylvinylsiloxane copolymer gum (average DP = 7,000) composed of 99.0 mole% siloxane unit with the formula CF₃CH₂CH₂MeSiO and 1.0 mole% siloxane unit with the formula CH₃ViSiO, 8 parts of a silanol-endblocked 3,3,3-trifluoropropylmethylsiloxane with average DP = 5, and 35 parts of a fumed silica with a specific surface area of 300 m²/g. To the resulting mixture was added 50 parts of a fluororubber in the form of a vinylidene fluoride-tetrafluoroethylene-hexafluoropropylene copolymer and 5 parts of a fluorosilicone oil (number average molecular weight = 30,000) with the following formula

Me₃SiO[F(CF₂)₈C₂H₄MeSiO]ₑ(CF₃CH₂CH₂MeSiO)_{f}SiMe₃

(e:f = 1:4),
followed by mixing for 1 hour. 100 parts of this mixture were then mixed to homogeneity on a two-roll mill with 0.5 part of 2,5-dimethyl-2,5-di(tert-butylperoxy)hexane to yield a curable rubber composition. The rubber composition was compression molded for 10 minutes at 170°C and 3.0 mPa pressure (30 kg/cm²) to yield a 2 mm-thick rubber sheet. Curing was brought to completion by heating the rubber sheet in an oven for an additional 4 hours at 200°C. The physical properties of the resulting rubber sheet are also reported in Table 1. The rubber sheet exhibited very good mold-release properties. In addition, the rubber sheet gave a smooth fracture surface, which was indicative of a thorough dispersion of each component in the cured rubber composition.

**Table 1**

| | Example 1 | Example 2 | Example 3 | Comparative Example 1 |
|---|---|---|---|---|
| hardness (JIS A) | 73 | 74 | 64 | 72 |
| | | | | |
| tensile strength (kg/cm²) | 125 | 113 | 116 | 89 |
| | | | | |
| [mPa] | [12.5] | [11.3] | [11.6] | [8.9] |
| | | | | |
| elongation (%) | 280 | 340 | 350 | 230 |
| | | | | |
| tear strength (kg/cm) | 23 | 21 | 21 | 19 |
| | | | | |
| [kN/m] | [22.5] | [20.6] | [20.6] | [18.6] |

## Claims

1. A rubber composition comprising:
(A) 100 parts by weight of a fluororubber;
(B) 2 to 200 parts by weight of a fluorosilicone gum that contains siloxane units of the formula CF₃CH₂CH₂MeSiO, in which Me denotes a methyl radical;
(C) 0.01 to 40 parts by weight of a fluorosilicone oil comprising siloxane units of the formula F(CF₂)ₐCH₂CH₂MeₙSiO_{(3-n)/2} and siloxane units of the formula CF₃CH₂CH₂MeSiO, wherein a is an integer having a value of at least 4, n is 0, 1, or 2 and Me denotes a methyl radical;
(D) 1 to 100 parts by weight of a silica micropowder; and
(E) 0.1 to 20 parts by weight of a curing agent sufficient to cure the composition.

2. The composition according to claim 1, wherein said fluororubber (A) is selected from the group consisting of vinylidene fluoride homopolymers, vinylidene fluoride-tetrafluoroethylene copolymers, vinylidene fluoride-hexafluoropropylene copolymers, vinylidene fluoride-tetrafluoroethylene-hexafluoropropylene copolymers, tetrafluoroethylene-hexafluoropropylene copolymers, and tetrafluoroethylene-perfluoroalkyl vinyl ether copolymers.

3. The composition according to claim 2, wherein at least 70 mole% of the siloxane units of said fluorosilicone gum (B) are units of the formula CF₃CH₂CH₂MeSiO, in which Me denotes a methyl radical.

4. The composition according to claim 3, wherein the molar ratio of F(CF₂)ₐCH₂CH₂MeₙSiO_{(3-n)/2} units to CF₃CH₂CH₂MeSiO units is 1:9 to 9:1, wherein Me denotes a methyl radical.

5. The composition according to claims 1 or 4, wherein said fluorosilicone oil (C) has the formula
F(CF₂)₈C₂H₄Me₂SiO (CF₃CH₂CH₂MeSiO)_{w}SiMe₂C₂H₄(CF₂)₈F
in which w is an integer having a value of 1 to 300 and Me denotes a methyl radical.

6. The composition according to claims 1 or 4, wherein said fluorosilicone oil (C) has the formula
Me₃SiO(F(CF₂)₄C₂H₄MeSiO)ₓ(CF₃CH₂CH₂MeSiO)_{y}SiMe₃
in which x and y are each integers with values of at least 1, (x + y) = 2 to 1,000 and Me denotes a methyl radical.

7. The composition according to claims 1 or 4, wherein said fluorosilicone oil (C) has the formula 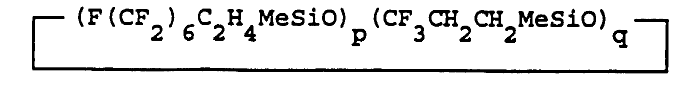 in which p and q are each integers with values of at least 1, (p + q) = 3 to 30 and Me denotes a methyl radical.

8. The composition according to claim 4, wherein said silica (D) has a specific surface area of 100 to 400 m²/g and is present at a level of 5 to 70 parts by weight for each 100 parts by weight of said fluororubber (A).

9. The composition according to claim 8, wherein said fluorosilicone gum (B) is present at a level of 5 to 150 parts by weight and said fluorosilicone oil (C) is present at a level of 0.1 to 20 parts by weight for each 100 parts by weight of said fluororubber (A).

## Patentansprüche

1. Kautschukzusammensetzung, die die folgenden Bestandteile enthält:
(A) 100 Gew.-Teile eines Fluorkautschuks;
(B) 2 bis 200 Gew/.-Teile eines Fluorsilicongummis, der Siloxaneinheiten der Formel CF₃CH₂CH₂MeSiO, worin Me für einen Methylrest steht, enthält;
(C) 0,01 bis 40 Gew.-Teile eines Fluorsiliconöls, das Siloxaneinheiten der Formel
F(CF₂)ₐCH₂CH₂MeₙSiO_{(3-n)/2} und Siloxaneinheiten der Formel CF₃CH₂CH₂MeSiO enthält, worin a für eine ganze Zahl mit einem Wert von mindestens 4 steht, n 0, 1 oder 2 bedeutet und Me für einen Methylrest steht;
(D) 1 bis 100 Gew.-Teile eines Siliciumdioxidmikropulvers und
(E) 0,1 bis 20 Gew.-Teile eines Härtungsmittels in einer ausreichenden Menge, um die Zusammensetzung auszuhärten.

2. Zusammensetzung nach Anspruch 1, wobei der Fluorkautschuk (A) unter Vinylidenfluoridhomopolymeren, Vinylidenfluorid-Tetrafluorethylen-Copolymeren, Vinylidenfluond-Hexafluorpropylen-Copolymeren, Vinylidenfluorid-Tetrafluorethylen-Hexafluorpropylen-Copolymeren, Tetrafluorethylen-Hexafluorpropylen-Copolymeren und Tetrafluorethylen-Perfluoralkylvinylether-Copolymeren ausgewählt ist.

3. Zusammensetzung nach Anspruch 2, wobei mindestens 70 Mol-% der Siloxaneinheiten des Fluorsilicongummis (B) aus Einheiten der Formel CF₃CH₂CH₂MeSiO bestehen, worin Me für einen Methylrest steht.

4. Zusammensetzung nach Anspruch 3, worin das Molverhältnis
F(CF₂)ₐCH₂CH₂MeₙSiO_{(3-n)/2}-Einheiten/CF₃CH₂CH₂MeSiO-Einheiten in einem Bereich von 1/9 bis 9/1 liegt, worin Me für einen Methylrest steht.

5. Zusammensetzung nach Anspruch 1 oder 4, worin das Fluorsiliconöl (C) die folgende Formel besitzt:
F(CF₂)₈C₂H₄Me₂SiO(CF₃CH₂CH₂MeSiO)_{w}SiMe₂C₂H₄(CF₂)₈F
worin w für eine ganze Zahl mit einem Wert von 1 bis 300 steht und Me einen Methylrest bedeutet.

6. Zusammensetzung nach Anspruch 1 oder 4, worin das Fluorsiliconöl (C) die folgende Formel besitzt:
Me₃SiO(F(CF₂)₄C₂H₄MeSiO)ₓ(CF₃CH₂CH₂MeSiO)_{y}SiMe₃
worin x und y jeweils für ganze Zahlen mit Werten von mindestens 1 stehen, (x + y) = 2 bis 1000 und Me einen Methylrest bedeutet.

7. Zusammensetzung nach Anspruch 1 oder 4, worin das Fluorsiliconöl (C) die folgende Formel besitzt: 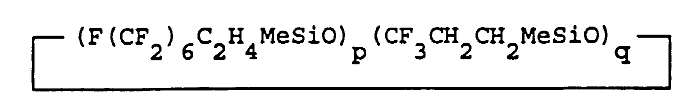 wonn p und q jeweils für ganze Zahlen mit Werten von mindestens 1 stehen, (p + q) = 3 bis 30 und Me einen Methylrest bedeutet.

8. Zusammensetzung nach Anspruch 4, worin das Siliciumdioxid (D) eine spezifische Oberfläche von 100 bis 400 m²/g besitzt und in Mengen von 5 bis 70 Gew.-Teilen pro 100 Gew.-Teile des Fluorkautschuks (A) vorhanden ist.

9. Zusammensetzung nach Anspruch 8, worin der Fluorsilicongummi (B) in Mengen von 5 bis 150 Gew.-Teilen und das Fluorsiliconöl (C) in Mengen von 0,1 bis 20 Gew.-Teilen jeweils pro 100 Gew.-Teile des Fluorkautschuks (A) vorhanden sind.

## Revendications

1. Une composition de caoutchouc comprenant :
(A) 100 parties en poids d'un caoutchouc fluoré ;
(B) 2 à 200 parties en poids d'une gomme de fluoro-silicone qui contient des motifs siloxanes de la formule CF₂CH₂CH₂MeSiO où Me représente un radical méthyle ;
(C) 0,01 à 40 parties en poids d'une huile de fluorosilicone comprenant des motifs siloxanes de la formule F(CF₂)ₐCH₂CH₂MeₙSiO_{(3-n)/2} et des motifs siloxanes de la formule CF₃CH₂CH₂MeSiO, où a est un nombre entier ayant une valeur d'au moins 4, n est 0, 1 ou 2 et Me représente un radical méthyle ;
(D) 1 à 100 parties en poids d'une micropoudre de silice ; et
(E) 0,1 à 20 parties en poids d'un agent durcisseur suffisant pour durcir la composition.

2. La composition selon la revendication 1, dans laquelle ledit caoutchouc fluoré (A) est choisi dans la classe formée par les homopolymères de fluorure de vinylidène, les copolymères fluorure de vinylidène-tétrafluoréthylène, les copolymères fluorure de vinylidène-hexafluoropropylène, les copolymères fluorure de vinylidène-tétrafluoréthylène-hexafluoropropylène, les copolymères tétrafluoréthylène-hexafluoropropylène et les copolymères tétrafluoréthylène-perfluoro(éther de vinyle et d'alkyle).

3. La composition selon la revendication 2, dans laquelle au moins 70 mol % des motifs siloxanes de ladite gomme de fluorosilicone (B) sont des motifs de la formule CF₃CH₂CH₂MeSiO où Me représente un radical méthyle.

4. La composition selon la revendication 3, dans laquelle le rapport molaire des motifs F(CF₂)ₐCH₂CH₂MeₙSiO_{(3-n)/2} aux motifs CF₃CH₂CH₂MeSiO est de 1:9 à 9:1, Me représentant un radical méthyle.

5. La composition selon les revendications 1 ou 4, dans laquelle ladite huile de fluorosilicone (C) répond à la formule F(CF₂)₈C₂H₄Me₂SiO (CF₃CH₂CH₂MeSiO)_{w}SiMe₂C₂H₄(CF₂)₈F où w est un nombre entier ayant une valeur de 1 à 300 et Me représente un radical méthyle.

6. La composition selon les revendications 1 ou 4, dans laquelle ladite huile de fluorosilicone (C) répond à la formule Me₃SiO(F(CF₂)₄C₂H₄MeSiO)ₓ(CF₃CH₂CH₂MeSiO)_{y}SiMe₃ où chacun de x et y est un nombre entier ayant une valeur d'au moins 1, (x + y) = 2 à 1000 et Me représente un radical méthyle.

7. La composition selon les revendications 1 ou 4, dans laquelle ladite huile de fluorosilicone (C) répond à la formule 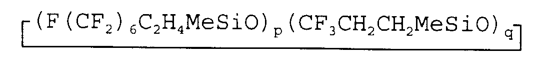 où chacun de p et q est un nombre entier ayant une valeur d'au moins 1, (p + q) = 3 à 30 et Me représente un radical méthyle.

8. La composition selon la revendication 4, dans laquelle ladite silice (D) a une surface spécifique de 100 à 400 m²/g et est présente en une proportion de 5 à 70 parties en poids pour 100 parties en poids dudit caoutchouc fluoré (A).

9. La composition selon la revendication 8, dans laquelle ladite gomme de fluorosilicone (B) est présente en une proportion de 5 à 150 parties en poids et ladite huile de fluorosilicone (C) est présente en une proportion de 0,1 à 20 parties en poids pour 100 parties en poids dudit caoutchouc fluoré (A).
